(19)

Europäisches
Patentamt

European
Patent Office

Office européen
des brevets

(11) **EP 3 733 785 A1**

(12) **EUROPEAN PATENT APPLICATION**

(43) Date of publication:
**04.11.2020 Bulletin 2020/45**

(51) Int Cl.:
**C09C 1/02** *(2006.01)*      **C01F 5/24** *(2006.01)*
**C11D 3/12** *(2006.01)*      **C11D 17/00** *(2006.01)*

(21) Application number: **19172507.6**

(22) Date of filing: **03.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Omya International AG**
**4665 Oftringen (CH)**

(72) Inventors:
- **KELLER, Tobias**
  **5043 Holziken (CH)**

- **RENTSCH, Samuel**
  **3095 Spiegel bei Bern (CH)**
- **BUDDE, Tanja**
  **4805 Brittnau (CH)**

(74) Representative: **Glas, Holger**
**Maiwald Patentanwalts- und Rechtsanwaltsgesellschaft mbH**
**Elisenhof**
**Elisenstraße 3**
**80335 München (DE)**

(54) **SURFACE-REACTED MAGNESIUM CARBONATE AS CARRIER MATERIAL FOR THE RELEASE OF ONE OR MORE ACTIVE AGENT(S) IN A HOME CARE FORMULATION**

(57) The present invention relates to a surface-reacted magnesium carbonate, a delivery system for the release of one or more active agent(s) in a home care formulation comprising the surface-reacted magnesium carbonate, a home care formulation comprising the delivery system for the release of one or more active agent(s), a method for preparing the surface-reacted magnesium carbonate and a method for preparing the delivery system for the release of one or more active agent(s) in a home care formulation, as well as the use of the surface-reacted magnesium carbonate as a carrier material for the release of one or more active agent(s) in a home care formulation and the use of the delivery system for the release of one or more active agent(s) in a home care formulation.

EP 3 733 785 A1

**Description**

The present invention relates to a surface-reacted magnesium carbonate, a delivery system for the release of one or more active agent(s) in a home care formulation comprising the surface-reacted magnesium carbonate, a home care formulation comprising the delivery system for the release of one or more active agent(s), a method for preparing the surface-reacted magnesium carbonate and a method for preparing the delivery system for the release of one or more active agent(s) in a home care formulation, as well as the use of the surface-reacted magnesium carbonate as a carrier material for the release of one or more active agent(s) in a home care formulation and the use of the delivery system for the release of one or more active agent(s) in a home care formulation.

Magnesium carbonate is well known in the art and occurs naturally in a great variety of forms, such as anhydrous magnesium carbonate or magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), dypingite ($Mg_5(CO_3)_4(OH)_2 \cdot 5H_2O$), giorgiosite ($Mg_5(CO_3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$) and nesquehonite ($MgCO_3 \cdot 3H_2O$).

Besides the natural magnesium carbonates, synthetic magnesium carbonates (or precipitated magnesium carbonates) can be prepared. For example, EP 0 526 121 describes a calcium-magnesium carbonate composite consisting of calcium carbonate and magnesium carbonate hydroxide and a method for the preparation thereof. Furthermore, GB 594,262 relates to a method and apparatus for treating magnesia-containing materials, such as magnesium and calcium carbonate materials for obtaining respective carbonates in discrete and separate forms, by controlled carbonation such that the magnesium and calcium carbonates may be separated by mechanical means and with attainment of special utilities in separated products.

Additionally, US 1,361,324, US 935,418, GB 548,197 and GB 544,907 generally describe the formation of aqueous solutions of magnesium bicarbonate (typically described as "$Mg(HCO_3)_2$"), which is then transformed by the action of a base, e.g., magnesium hydroxide, to form hydromagnesite. Other processes described in the art suggest to prepare compositions containing both, hydromagnesite and magnesium hydroxide, wherein magnesium hydroxide is mixed with water to form a suspension which is further contacted with carbon dioxide and an aqueous basic solution to form the corresponding mixture; cf. for example US 5,979,461.

It is well known that magnesium carbonate can be used in home care formulations. For example, US 4,303,542 refers to a powdered detergent suitable for use in home laundry machines. The detergent contains (1) an acid component which provides an initial wash solution with a pH of 1-4 and (2) a coated alkali-supplying substance which neutralizes the acid wash solution within a period of about 2 to 25 minutes. According to the example section, a soak consists of 110 g sodium bisulphate, 20 g magnesium carbonate, 30 g non-ionic surfactants in a ratio liquid to solid of 1:3 and 13 g BW 7380. Unpublished European patent application 18 153 662.4 refers to a carrier material for the release of one or more active agent(s) in a home care formulation, the carrier material consisting of magnesium carbonate having a specific surface area of $\geq 25$ m$^2$/g, measured using nitrogen and the BET method according to ISO 9277:2010.

However, there is still a need in the art for providing a carrier material having improved loading and release characteristics, i.e. providing a high loading capacity together with a high release efficiency when loaded with active agent(s), compared to e.g. a carrier material consisting of neat magnesium carbonate. Furthermore, it is desirable that the carrier material can be used as delivery material in a home care formulation.

Accordingly, it is an objective of the present invention to provide a carrier material that is suitable for the release of active agent(s) in a home care formulation. Furthermore, it is desirable to provide a carrier material that features improved loading and release characteristics, especially compared to (neat) magnesium carbonate. In particular, it is desired to provide a carrier material providing a high loading capacity together with a high release efficiency when loaded with active agent(s) compared to a (neat) magnesium carbonate. It is also desired to provide a method for preparing such a material. It is further desired to provide a delivery system for the release of one or more active agent(s) in a home care formulation. It is also desired to provide a method for preparing a delivery system for the release of active agent(s). Further objectives can be gathered from the following description of the invention.

The foregoing objects and other objects are solved by the subject-matter as defined herein in the independent claims.

Advantageous embodiments of the inventive use are defined in the corresponding sub-claims.

According to one aspect of the present invention, a surface-reacted magnesium carbonate is provided. The surface-reacted magnesium carbonate is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

The inventors surprisingly found out that the foregoing surface-reacted magnesium carbonate can be used as carrier material having a high loading capacity for active agent(s) together with a high release efficiency when loaded with active agent(s) and thus is highly suitable as a delivery system for the release of one or more active agent(s) in a home care formulation. More precisely, the inventors found out that the loading and release characteristics for active agent(s) in a home care formulation can be improved compared to a (neat) magnesium carbonate by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

According to one embodiment, the magnesium carbonate is selected from the group consisting of anhydrous magnesium carbonate or magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), 15 dypingite ($Mg_5(CO_3)_4(OH)_2 \cdot 5H_2O$), giorgiosite ($Mg_5(CO_3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$), dolocarbonate and nesquehonite ($MgCO_3 \cdot 3H_2O$)

According to another embodiment, the magnesium carbonate has a) a BET specific surface area in the range from 10 to 100 $m^2/g$, preferably from 12 to 50 $m^2/g$, and most preferably from 17 to 40 $m^2/g$, measured using nitrogen and the BET method according to ISO 9277:2010, and/or b) an intra-particle intruded specific pore volume in the range from 0.9 to 2.3 $cm^3/g$, preferably from 1.2 to 2.1 $cm^3/g$, and most preferably from 1.5 to 2.0 $cm^3/g$, calculated from mercury porosimetry measurement, and/or c) a $d_{50}$(vol) in the range from 1 to 75 $\mu$m, preferably from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction, and/or d) a $d_{98}$(vol) in the range from 2 to 150 $\mu$m, preferably from 4 to 100 $\mu$m, more preferably from 6 to 80 $\mu$m, even more preferably from 8 to 60 $\mu$m and most preferably from 10 to 40 $\mu$m, as determined by laser diffraction.

According to yet another embodiment, the magnesium carbonate has a ratio of intra-particle intruded specific pore volume, calculated from mercury porosimetry measurement, to BET specific surface area, measured using nitrogen and the BET method according to ISO 9277:2010, of more than 0.01 $cm^3/m^2$, preferably more than 0.05 $cm^3/m^2$, and most preferably more than 0.06 $cm^3/m^2$, such as from 0.06 to 0.25 $cm^3/m^2$.

According to one embodiment, the magnesium carbonate contains up to 25 000 ppm $Ca^{2+}$ ions.

According to another embodiment, the surface-reacted magnesium carbonate is obtained by treating the surface of the magnesium carbonate with the one or more compound(s) or a corresponding salt thereof in an amount from 0.1 to 20 wt.-%, based on the total dry weight of the magnesium carbonate.

According to yet another embodiment, the surface-reacted magnesium carbonate is a carrier material for the release of one or more active agent(s) in a home care formulation.

According to another aspect, a delivery system for the release of one or more active agent(s) in a home care formulation is provided, the delivery system comprising the surface-reacted magnesium carbonate according to any one of the preceding claims and one or more active agent(s) which is loaded on the carrier material.

According to one embodiment, the one or more active agent(s) is/are loaded onto and/or loaded into the pore volume of the surface-reacted magnesium carbonate. According to another embodiment, the one or more active agent(s) is selected from the group of active agents mentioned in the Regulation (EC) No 648/2004 of the European Parliament and of the Council of 31 March 2004 on detergents, preferably the one or more active agent(s) is selected from the group comprising anionic surfactants, nonionic surfactants, cationic surfactants, amphoteric surfactants, phosphates, phosphonates, softener, sequestrants, builders, processing aids, enzymes, oxygen-based bleaching agents, chlorine-based bleaching agents, anti-scaling agents, complexing agents, dispersing agents, nitrilotriacetic acid and salts thereof, phenols, halogenated phenols, paradichlorobenzene, aromatic hydrocarbons, aliphatic hydrocarbons, halogenated hydrocarbons, soap, zeolites, polycarboxylates, disinfectants, optical brightener, defoamers, colorants, fragrances and mixtures thereof.

According to yet another embodiment, the delivery system comprises the one or more active agent(s) in an amount ranging from 10 to 300 wt.-%, preferably from 40 to 290 wt.-%, more preferably from 60 to 280 wt.-%, and most preferably from 80 to 260 wt.-%, e.g. from 90 to 200 wt.-%, based on the total weight of the carrier material.

According to one embodiment, the delivery system is in the form of a free flowing powder, a tablet, a pellet, or granules, preferably a free flowing powder.

According to a further aspect of the present invention, a home care formulation comprising a delivery system for the release of one or more active agent(s) as defined herein is provided.

According to one embodiment, the formulation is in form of a liquid, a free flowing powder, a paste, a gel, a bar, a cake, a pouch or a moulded piece, such as a tablet. According to another embodiment, the formulation is a washing formulation, preferably for cleaning of laundry, fabrics, dishes and hard surfaces; a pre-washing formulation; a rinsing formulation; a bleaching formulation; a laundry fabric-softener formulation; a cleaning formulation; and mixtures thereof.

According to still another aspect of the present invention, a method for preparing a surface-reacted magnesium carbonate as defined herein is provided, the method comprising at least the steps of:

3

i) providing magnesium carbonate,

ii) providing one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof, and

iii) treating the surface of the magnesium carbonate of step a), under mixing, in one or more steps, with the one or more compound(s) or a corresponding salt thereof of step b) such that a reaction is achieved by the one or more compound(s) or the corresponding salt thereof and the surface of said magnesium carbonate.

According to another aspect of the present invention, a method for preparing a delivery system for the release of one or more active agent(s) in a home care formulation as defined herein is provided, the method comprising the steps of

a) providing a surface-reacted magnesium carbonate which is obtained by treating the surface of the magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof,

b) providing one or more active agent(s) in the form of a liquid or dissolved in a solvent,

c) contacting the surface-reacted magnesium carbonate of step a) with the one or more active agent(s) of step b), and

d) optionally removing the solvent by evaporation if used in step b).

According to a further aspect of the present invention, the use of a surface-reacted magnesium carbonate as defined herein as a carrier material for the release of one or more active agent(s) in a home care formulation is provided.

According to still a further aspect of the present invention, the use of a delivery system as defined herein for the release of one or more active agent(s) in a home care formulation is provided.

It should be understood that for the purposes of the present invention, the following terms have the following meanings:

A "surface-reacted magnesium carbonate" in the meaning of the present invention is a material prepared by treating the surface of the magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof such that at least a part of the one or more compound(s) react with the magnesium carbonate to form a salty reaction product different from the starting compound. The surface-reacted magnesium carbonate may have a core-shell structure where the starting magnesium carbonate is located in the core of the particle, and the salty reaction product is located on the outer shell. The magnesium ions forming said salty reaction product originate largely from the starting magnesium carbonate. Such salts may include $OH^-$ anions and/or crystal water.

In the meaning of the present invention "water-insoluble" materials are defined as materials which, when mixed with deionised water and filtered on a filter having a 0.2 $\mu$m pore size at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of recovered solid material following evaporation at 95 to 100°C of 100 g of said liquid filtrate.

The "specific surface area" (expressed in $m^2/g$) of a material as used throughout the present application can be determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 150 °C under vacuum for a period of 60 min prior to measurement.

Volume determined median particle size $d_{50}(vol)$ and the volume determined top cut particle size $d_{98}$ was evaluated using a Malvern Mastersizer 3000 Laser Diffraction System (Malvern Instruments Plc., Great Britain) equipped with a Hydro LV system. The $d_{50}(vol)$ or $d_{98}(vol)$ value indicates a diameter value such that 50 % or 98 % by volume, respectively, of the particles have a diameter of less than this value. The powders were suspended in 0.1 wt.-% $Na_4O_7P_2$ solution. 10 mL of 0.1 wt.-% $Na_4O_7P_2$ was added to the Hydro LV tank, then the sample slurry was introduced until an obscuration between 10-20 % was achieved. Measurements were conducted with red and blue light for 10 s each. For the analysis of the raw data, the models for non-spherical particle sizes using Mie theory was utilized, and a particle refractive index of 1.57, a density of 2.70 $g/cm^3$, and an absorption index of 0.005 was assumed. The methods and instruments are known to the skilled person and are commonly used to determine particle size distributions of fillers and pigments.

The specific pore volume is measured using mercury intrusion porosimetry using a Micromeritics Autopore V 9620 mercury porosimeter having a maximum applied pressure of mercury 414 MPa (60 000 psi), equivalent to a Laplace throat diameter of 0.004 $\mu$m ($\sim$ nm). The equilibration time used at each pressure step is 20 seconds. The sample material is sealed in a 3 cm$^3$ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p. 1753-1764).

The total pore volume seen in the cumulative intrusion data can be separated into two regions with the intrusion data from 208 $\mu$m down to about 1-4 $\mu$m showing the coarse packing of the sample between any agglomerate structures contributing strongly. Below these diameters lies the fine interparticle packing of the particles themselves. If they also have intraparticle pores, then this region appears bi-modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following preferred embodiments of the inventive surface-reacted magnesium carbonate will be set out in more detail. It is to be understood that these embodiments and details also apply to the inventive products, methods and uses.

Surface-reacted magnesium carbonate

According to the present invention, a surface-reacted magnesium carbonate is provided. The surface-reacted magnesium carbonate is obtained by treating the surface of a magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

It is appreciated that the term "magnesium carbonate" refers to a material that comprises at least 38 wt.-% of magnesium carbonate. In one embodiment, the magnesium carbonate comprises at least 38 wt.-%, preferably between 38 and 100 wt.-%, more preferably between 38 and 99.95 wt.-%, e.g. from 38 to 55 wt.-%, based on the total dry weight of the material, of magnesium carbonate. In another embodiment, the magnesium carbonate comprises at least 85 wt.-%, preferably between 85 and 100 wt.-%, more preferably between 90 and 99.95 wt.-%, based on the total dry weight of the material, of magnesium carbonate. Thus, it is to be noted that the magnesium carbonate may further comprise impurities typically associated with the type of material used. For example, the magnesium carbonate may further comprise impurities such as calcium hydroxide, calcium carbonate and mixtures thereof.

For example, if the magnesium carbonate comprises magnesium carbonate in an amount of at least 38 wt.-%, preferably between 38 and 100 wt.-%, more preferably between 38 and 99.95 wt.-%, e.g. from 38 to 45 wt.-%, based on the total dry weight of the material, the impurities such as calcium hydroxide, calcium carbonate and mixtures thereof are present in amounts of less than 62 wt.-%, preferably between 0 and 62 wt.-%, more preferably between 0.05 and 62 wt.-%, e.g. from 45 to 62 wt.-%, based on the total dry weight of the material. If the magnesium carbonate comprises between 85 and 100 wt.-%, more preferably between 90 and 99.95 wt.-%, based on the total dry weight of the material, the impurities such as calcium hydroxide, calcium carbonate and mixtures thereof are present in amounts of less than 15 wt.-% and most preferably from 0.05 to 10 wt.-%, based on the total dry weight of the material. It is further appreciated that the magnesium carbonate may be a dolocarbonate.

In the meaning of the present invention, the term "dolocarbonate" refers to a composite material comprising a magnesium mineral, preferably hydromagnesite ($Mg_5(CO_3)_4(OH)_2 \cdot 4H_2O$), and calcium carbonate agglomerated at primary particle level. Such dolocarbonates are for examples described in WO 2013/139957 A1 and WO 2015/039994 A1, which are thus incorporated by references.

The magnesium carbonate can be a naturally occurring or synthetic magnesium carbonate.

The magnesium carbonate can be a naturally occurring or synthetic magnesium carbonate. For example, the magnesium carbonate encompasses naturally occurring or synthetic magnesium carbonate selected from the group comprising magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), dypingite ($Mg_5(CO_3)_4(OH)_2 \cdot 5H_2O$), giorgiosite ($Mg_5(CO_3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$), nesquehonite ($MgCO_3 \cdot 3H_2O$), dolocarbonate and mixtures thereof.

Preferably, the magnesium carbonate encompasses synthetic magnesium carbonate selected from the group comprising magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), dypingite ($Mg_5(CO_3)_4(OH)_2 \cdot 5H_2O$), giorgiosite ($Mg_5(CO3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$), nesquehonite ($MgCO_3 \cdot 3H_2O$), dolocarbonate and mixtures thereof. For example, the magnesium carbonate comprises the synthetic magnesium carbonate selected from the group comprising magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), dypingite ($Mg_5(CO_3)_4(OH)_2 \cdot 5H_2O$), giorgiosite ($Mg_5(CO3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$), nesquehonite ($MgCO_3 \cdot 3H_2O$), dolocarbonate and mixtures thereof in an amount of at least 80 wt.-%, more preferably at least 85 wt.-%, even more preferably between 85 and 100 wt.-%, and most preferably between 90 and 99.95 wt.-%, based on the total dry weight of the material.

In one embodiment, the magnesium carbonate comprises synthetic hydromagnesite ($Mg_5(CO_3)_4(OH)_2 \cdot 4H_2O$). Preferably, the magnesium carbonate comprises synthetic hydromagnesite ($Mg_5(CO_3)_4(OH)_2 \cdot 4H_2O$) in an amount of at least 80 wt.-%, more preferably at least 85 wt.-%, even more preferably between 85 and 100 wt.-%, and most preferably between 90 and 99.95 wt.-%, based on the total dry weight of the material.

The magnesium carbonate is in the form of a particulate material, and may have a particle size distribution as conventionally employed for the material(s) involved in the type of product to be produced. In general, it is preferred that the magnesium carbonate has a $d_{50}$(vol) in the range from 1 to 75 $\mu$m, as determined by laser diffraction. For example, the magnesium carbonate has a $d_{50}$(vol) in the range from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction.

Additionally or alternatively, the magnesium carbonate has a $d_{98}$(vol) in the range from 2 to 150 $\mu$m, as determined by laser diffraction. For example, the magnesium carbonate has a $d_{98}$(vol) in the range from 4 to 100 $\mu$m, more preferably from 6 to 80 $\mu$m, even more preferably from 8 to 60 $\mu$m and most preferably from 10 to 40 $\mu$m, as determined by laser diffraction.

Thus, the magnesium carbonate preferably has a

a) a $d_{50}$(vol) in the range from 1 to 75 $\mu$m, preferably from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction, and
b) a $d_{98}$(vol) in the range from 2 to 150 $\mu$m, preferably from 4 to 100 $\mu$m, more preferably from 6 to 80 $\mu$m, even more preferably from 8 to 60 $\mu$m and most preferably from 10 to 40 $\mu$m, as determined by laser diffraction.

In one embodiment, the magnesium carbonate has a $d_{50}$(vol) in the range from 1.9 to 10 $\mu$m, as determined by laser diffraction, and a $d_{98}$(vol) in the range from 10 to 40 $\mu$m, as determined by laser diffraction.

For example, the magnesium carbonate is synthetic hydromagnesite ($Mg_5(CO_3)_4(OH)_2 \cdot 4H_2O$) and has a volume median grain diameter ($d_{50}$) in the range from 1.9 to 10 $\mu$m, as determined by laser diffraction, and a volume determined top cut particle size ($d_{98}$) in the range from 10 to 40 $\mu$m, as determined by laser diffraction.

Preferably, the magnesium carbonate has a specific surface area of $\geq$ 10 $m^2$/g, measured using nitrogen and the BET method according to ISO 9277:2010. It is preferred that the magnesium carbonate has a specific surface area in the range from 10 to 100 $m^2$/g, more preferably from 15 to 50 $m^2$/g, and most preferably from 20 to 40 $m^2$/g, measured using nitrogen and the BET method according to ISO 9277:2010.

Furthermore, it is specifically advantageous if the magnesium carbonate has a high intra-particle intruded specific pore volume. For example, it is preferred that the magnesium carbonate has an intra-particle intruded specific pore volume in the range from 0.9 to 2.3 $cm^3$/g, calculated from mercury intrusion porosimetry. In one embodiment, the magnesium carbonate has an intra-particle intruded specific pore volume in the range from 1.2 to 2.1 $cm^3$/g, and most preferably from 1.5 to 2.0 $cm^3$/g, calculated from mercury intrusion porosimetry.

According to one embodiment, the magnesium carbonate has

a) a specific surface area in the range from 10 to 100 $m^2$/g, more preferably from 15 to 50 $m^2$/g, and most preferably from 20 to 40 $m^2$/g, measured using nitrogen and the BET method according to ISO 9277:2010, and
b) an intra-particle intruded specific pore volume in the range from 0.9 to 2.3 $cm^3$/g, preferably from 1.2 to 2.1 $cm^3$/g, and most preferably from 1.5 to 2.0 $cm^3$/g, calculated from mercury porosimetry measurement.

Preferably, the magnesium carbonate has a specific surface area in the range from 20 to 40 $m^2$/g, measured using nitrogen and the BET method according to ISO 9277:2010, and an intra-particle intruded specific pore volume in the range from 1.5 to 2.0 $cm^3$/g, calculated from mercury porosimetry measurement.

In one embodiment, the magnesium carbonate has a ratio of intra-particle intruded specific pore volume, calculated from mercury porosimetry measurement, to BET specific surface area, measured using nitrogen and the BET method according to ISO 9277:2010, of more than 0.01 $cm^3$/$m^2$, preferably more than 0.05 $cm^3$/$m^2$, and most preferably more than 0.06 $cm^3$/$m^2$, such as from 0.06 to 0.25 $cm^3$/$m^2$.

For example, the magnesium carbonate is synthetic hydromagnesite ($Mg_5(CO_3)_4(OH)_2 \cdot 4H_2O$) and has a ratio of intra-particle intruded specific pore volume, calculated from mercury porosimetry measurement, to BET specific surface area, measured using nitrogen and the BET method according to ISO 9277:2010, of equal or more than 0.01 $cm^3$/$m^2$, preferably equal or more than 0.05 $cm^3$/$m^2$, and most preferably equal or more than 0.06 $cm^3$/$m^2$, such as from 0.06 to 0.25 $cm^3$/$m^2$.

In one embodiment, the magnesium carbonate contains up to 25 000 ppm $Ca^{2+}$ ions. For example, the magnesium carbonate contains up to 20 000 ppm, more preferably up to 15 000 ppm and most preferably up to 5 000 ppm $Ca^{2+}$ ions.

According to the present invention, the surface-reacted magnesium carbonate is obtained by treating the surface of the magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

Accordingly, it should be noted that the surface-reacted magnesium carbonate is obtained by treating the surface of the magnesium carbonate with one compound. Alternatively, the surface-reacted magnesium carbonate is obtained by treating the surface of the magnesium carbonate with two or more compounds. For example, the surface-reacted magnesium carbonate is obtained by treating the surface of the magnesium carbonate with two or three or four compounds, like two compounds.

In one embodiment of the present invention, the surface-reacted magnesium carbonate is obtained by treating the surface of the magnesium carbonate with two compounds.

According to one embodiment, the surface-reacted magnesium carbonate is obtained by treating the surface of the magnesium carbonate with sulphuric acid.

In one embodiment, the surface-reacted magnesium carbonate is obtained by treating the surface of the magnesium carbonate with a salt of sulphuric acid, e.g. an alkali metal salt of sulphuric acid. For example, the alkali metal salt of sulphuric acid is sodium sulphate or potassium sulphate, preferably sodium sulphate.

Additionally or alternatively, the surface-reacted magnesium carbonate is obtained by treating the surface of the magnesium carbonate with phosphoric acid.

In one embodiment, the surface-reacted magnesium carbonate is obtained by treating the surface of the magnesium carbonate with a salt of phosphoric acid, e.g. an alkali metal salt of phosphoric acid. For example, the alkali metal salt of phosphoric acid is sodium phosphate or potassium phosphate, preferably sodium phosphate.

Additionally or alternatively, the surface-reacted magnesium carbonate is obtained by treating the surface of the magnesium carbonate with carbonic acid.

In one embodiment, the surface-reacted magnesium carbonate is obtained by treating the surface of the magnesium carbonate with a salt of carbonic acid, e.g. an alkali metal salt of carbonic acid. For example, the alkali metal salt of carbonic acid is sodium carbonate or potassium carbonate, preferably sodium carbonate.

Additionally or alternatively, the surface-reacted magnesium carbonate is obtained by treating the surface of the magnesium carbonate with a carboxylic acid containing up to six carbon atoms.

The carboxylic acid containing up to six carbon atoms is preferably an aliphatic carboxylic acid and may be selected from one or more linear chain, branched chain, saturated, unsaturated and/or alicyclic carboxylic acids. Preferably, the carboxylic acid containing up to six carbon atoms is a monocarboxylic acid, i.e. the carboxylic acid containing up to six carbon atoms is characterized in that a single carboxyl group is present. Said carboxyl group is preferably placed at the end of the carbon skeleton.

In one embodiment of the present invention, the carboxylic acid containing up to six carbon atoms is preferably selected from the group consisting of formic acid, acetic acid, propionic acid, lactic acid, butanoic acid, pentanoic acid, hexanoic acid and mixtures thereof. More preferably, the carboxylic acid containing up to six carbon atoms is selected from the group consisting of formic acid, acetic acid, propionic acid, lactic acid, butanoic acid and mixtures thereof.

For example, the carboxylic acid containing up to six carbon atoms is selected from the group consisting of formic acid, acetic acid, propionic acid, lactic acid, and mixtures thereof. Preferably, the carboxylic acid containing up to six carbon atoms is selected from the group consisting of acetic acid, propionic acid and mixtures thereof.

In one embodiment, the carboxylic acid containing up to six carbon atoms is acetic acid.

In one embodiment, the surface-reacted magnesium carbonate is obtained by treating the surface of the magnesium carbonate with a salt of the carboxylic acid containing up to six carbon atoms, e.g. an alkali metal salt of the carboxylic acid containing up to six carbon atoms. For example, the alkali metal salt of the carboxylic acid containing up to six carbon atoms is a sodium or potassium salt, preferably sodium salt, of formic acid, acetic acid, propionic acid, lactic acid, and mixtures thereof.

Additionally or alternatively, the surface-reacted magnesium carbonate is obtained by treating the surface of the magnesium carbonate with a di-, and/or tri-carboxylic acid containing up to six carbon atoms where the carboxylic acid groups are linked by a chain of 0-4 intermittent carbon atoms.

The dicarboxylic acid containing up to six carbon atoms is characterized in that two carboxyl groups are present. Said carboxyl groups are preferably placed at each end of the carbon skeleton with the proviso that the carboxylic acid groups are linked by a chain of 0-4 intermittent carbon atoms.

In one embodiment of the present invention, the dicarboxylic acid containing up to six carbon atoms is preferably selected from the group consisting of oxalic acid, malonic acid, maleic acid, succinic acid, tartaric acid, glutaric acid, adipic acid, fumaric acid, and mixtures thereof. More preferably, the dicarboxylic acid containing up to six carbon atoms is selected from the group consisting of oxalic acid, succinic acid, maleic acid, malonic acid, tartaric acid, adipic acid, fumaric acid and mixtures thereof.

In one embodiment, the surface-reacted magnesium carbonate is obtained by treating the surface of the magnesium carbonate with a salt of the dicarboxylic acid containing up to six carbon atoms, e.g. an alkali metal salt of the dicarboxylic acid containing up to six carbon atoms. For example, the alkali metal salt of the dicarboxylic acid containing up to six carbon atoms is a sodium salt of oxalic acid, succinic acid, maleic acid, malonic acid, tartaric acid, adipic acid and/or fumaric acid, preferably a sodium salt of oxalic acid, maleic acid, malonic acid and/or fumaric acid. It is appreciated that the salt of the dicarboxylic acid containing up to six carbon atoms can be a monobasic or dibasic salt of the dicarboxylic acid.

The tricarboxylic acid containing up to six carbon atoms is characterized in that three carboxyl groups are present. Two carboxyl groups are placed at each end of the carbon skeleton with the proviso that the two carboxylic acid groups are linked by a chain of 0-4 intermittent carbon atoms.

In one embodiment of the present invention, the tricarboxylic acid containing up to six carbon atoms is preferably selected from the group consisting of citric acid, isocitric acid, aconitic acid and mixtures thereof. More preferably, the tricarboxylic acid containing up to six carbon atoms is selected from citric acid and/or isocitric acid.

Most preferably, the tricarboxylic acid containing up to six carbon atoms is citric acid.

In one embodiment, the surface-reacted magnesium carbonate is obtained by treating the surface of the magnesium carbonate with a salt of the tricarboxylic acid containing up to six carbon atoms, e.g. an alkali metal salt of the tricarboxylic acid containing up to six carbon atoms. For example, the alkali metal salt of the tricarboxylic acid containing up to six carbon atoms is sodium citrate or potassium citrate, preferably sodium citrate. It is appreciated that the salt of the tricarboxylic acid containing up to six carbon atoms can be a monobasic or dibasic or tribasic salt of the tricarboxylic acid. For example, the salt of the tricarboxylic acid containing up to six carbon atoms can be a monobasic or dibasic or tribasic citrate, such as monobasic or dibasic or tribasic sodium citrate.

In one embodiment, the surface-reacted magnesium carbonate is obtained by treating the surface of magnesium carbonate with one or more compound(s) being di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof. Alternatively, the surface-reacted magnesium carbonate is obtained by treating the surface of magnesium carbonate with one or more compound(s) being a sodium salt of di- and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof.

Preferably, the surface-reacted magnesium carbonate is obtained by treating the surface of the magnesium carbonate with phosphoric acid or an alkali metal salt of phosphoric acid, such as sodium phosphate, more preferably an alkali metal salt of phosphoric acid, such as sodium phosphate. Alternatively, the surface-reacted magnesium carbonate is obtained by treating the surface of the magnesium carbonate with sulphuric acid or an alkali metal salt of sulphuric acid, such as sodium sulphate, more preferably sodium sulphate. Alternatively, the surface-reacted magnesium carbonate is obtained by treating the surface of the magnesium carbonate with citric acid or an alkali metal salt of citric acid, such as sodium citrate, more preferably an alkali metal salt of citric acid, such as sodium citrate.

In view of the above, the surface of the magnesium carbonate preferably comprises one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof and/or reaction products thereof.

The term "reaction products" in the meaning of the present invention refers to products obtained by contacting the surface of the magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof. Said reaction products are formed between the applied one or more compound(s) and reactive molecules located at the surface of the magnesium carbonate.

It is appreciated that the surface-reacted magnesium carbonate is preferably obtained by treating the surface of the magnesium carbonate with the one or more compound(s) or a corresponding salt thereof in an amount from 0.1 to 20 wt.-%, based on the total dry weight of the magnesium carbonate. For example, the surface-reacted magnesium carbonate is preferably obtained by treating the surface of the magnesium carbonate with the one or more compound(s) or a corresponding salt thereof in an amount from 0.1 to 15 wt.-%, based on the total dry weight of the magnesium carbonate. Preferably, the surface-reacted magnesium carbonate is preferably obtained by treating the surface of the magnesium carbonate with the one or more compound(s) or a corresponding salt thereof in an amount from 0.5 to 15 wt.-%, based on the total dry weight of the magnesium carbonate.

In general, the surface-reacted magnesium carbonate can be prepared by any known method suitable for obtaining a treatment layer of one or more compound(s) on the surface of filler materials such as magnesium carbonate.

According to one aspect of the present invention, a method for preparing the surface-reacted magnesium carbonate is provided. The method for preparing the surface-reacted magnesium carbonate comprises at least the steps of:

i) providing magnesium carbonate,
ii) providing one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof, and
iii) treating the surface of the magnesium carbonate of step a), under mixing, in one or more steps, with the one or more compound(s) or a corresponding salt thereof of step b) such that a reaction is achieved by the one or more compound(s) or the corresponding salt thereof and the surface of said magnesium carbonate.

For example, the surface-reacted magnesium carbonate is prepared in a dry method, e.g. by applying the one or more compound(s) onto the surface of the magnesium carbonate without using solvents. If the one or more compound(s) are in a solid state, the one or more compound(s) may be heated in order to provide them in a liquid state for ensuring an essentially even distribution of the one or more compound(s) on the surface of the magnesium carbonate.

Alternatively, the surface-reacted magnesium carbonate is prepared in a wet method, e.g. by dissolving the one or more compound(s) in a solvent and applying the mixture onto the surface of the magnesium carbonate. Optionally the mixture comprising the solvent and the one or more compound(s) may be heated. If the one or more compound(s) are dissolved in a solvent, the solvent is preferably an organic solvent, preferably selected from toluene, acetone and ethanol.

In general, the step of treating the surface of the magnesium carbonate with the one or more compound(s) or a corresponding salt thereof may be carried out by any method suitable for achieving an essentially even distribution of the one or more compound(s) and thus a reaction on the surface of the magnesium carbonate. Thus, the one or more compound(s) and the magnesium carbonate are mixed, preferably agitated or shaken, to facilitate and accelerate the preparation of the surface-reacted magnesium carbonate, e.g. by using a mixing device, spray coater or encapsulation processes. If a solvent is used, the obtained surface-reacted magnesium carbonate may be dried to remove the volatile components, preferably under vacuum.

In the dry and wet method, the step of treating the surface of the magnesium carbonate with the one or more compound(s) or a corresponding salt thereof such that a reaction is achieved by the one or more compound(s) or the corresponding salt thereof and the surface of said magnesium carbonate may be carried out in a single step or in at least two steps.

According to one embodiment of the present invention, the surface-reacted magnesium carbonate is thus prepared by means of one or more of the following methods:

(i) dry treatment, i.e. treating the surface of the magnesium carbonate with the one or more compound(s) which is/are in neat form, preferably in a mixing device or by using a spray coater;
(ii) wet treatment, i.e. treating the surface of the carbonate with the one or more compound(s) which is/are dissolved in a solvent, optionally under heating, preferably in a mixing device or by using a spray coater; or
(iii) melt dry treatment, i.e. treating the surface of the magnesium carbonate with a melt of the one or more compound(s) which is/are in neat form in a heated mixer (e.g. a fluid bed mixer).

The surface-reacted magnesium carbonate obtained is preferably in form of particles having a volume median grain diameter ($d_{50}$) in the range from 1 to 75 $\mu$m, preferably from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction. According to a further embodiment of the present invention, the surface-reacted magnesium carbonate is in form of particles having a volume determined top cut particle size ($d_{98}$) in the range from 2 to 150 $\mu$m, preferably from 4 to 100 $\mu$m, more preferably from 6 to 80 $\mu$m, even more preferably from 8 to 60 $\mu$m and most preferably from 10 to 40 $\mu$m, as determined by laser diffraction.

Thus, the surface-reacted magnesium carbonate is in form of particles preferably having a

a) a volume median grain diameter ($d_{50}$) in the range from 1 to 75 $\mu$m, preferably from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction, and
b) a volume determined top cut particle size ($d_{98}$) in the range from 2 to 150 $\mu$m, preferably from 4 to 100 $\mu$m, more preferably from 6 to 80 $\mu$m, even more preferably from 8 to 60 $\mu$m and most preferably from 10 to 40 $\mu$m, as determined by laser diffraction.

In one embodiment, the surface-reacted magnesium carbonate is in form of particles having a volume median grain diameter ($d_{50}$) in the range from 1.9 to 10 $\mu$m, as determined by laser diffraction, and a volume determined top cut particle size ($d_{98}$) in the range from 10 to 40 $\mu$m, as determined by laser diffraction.

For example, the surface-reacted magnesium carbonate is obtained by treating the surface of synthetic hydromagnesite ($Mg_5(CO_3)_4(OH)_2 \cdot 4H_2O$) with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof and has a volume median grain diameter ($d_{50}$) in the range from 1.9 to 10 $\mu$m, as determined by laser diffraction, and a volume determined top cut particle size ($d_{98}$) in the range from 10 to 40 $\mu$m, as determined by laser diffraction.

In one embodiment, the surface-reacted magnesium carbonate is in form of particles having a BET specific surface area in the range from 10 to 100 $m^2/g$, preferably from 12 to 50 $m^2/g$, and most preferably from 17 to 40 $m^2/g$, measured using nitrogen and the BET method according to ISO 9277:2010.

Additionally or alternatively, the surface-reacted magnesium carbonate is in form of particles having an intra-particle intruded specific pore volume in the range from 0.9 to 2.3 $cm^3/g$, preferably from 1.2 to 2.1 $cm^3/g$, and most preferably from 1.5 to 2.0 $cm^3/g$, calculated from mercury porosimetry measurement.

It is appreciated that the surface-reacted magnesium carbonate is specifically suitable as a carrier material for the release of one or more active agent(s) in a home care formulation.

In a further aspect, the present inventions thus refers to the use of the surface-reacted magnesium carbonate as defined herein as a carrier material for the release of one or more active agent(s) in a home care formulation

With regard to the definition of the surface-reacted magnesium carbonate and preferred embodiments thereof, reference is made to the statements provided above when discussing the technical details of the surface-reacted magnesium carbonate of the present invention.

Delivery system

According to a further aspect, a delivery system for the release of one or more active agent(s) in a home care formulation is provided. It is required that the delivery system comprises the surface-reacted magnesium carbonate as defined herein and one or more active agent(s) which is/are loaded on the carrier material, i.e. the surface-reacted magnesium carbonate.

With regard to the definition of the surface-reacted magnesium carbonate and preferred embodiments thereof, reference is made to the statements provided above when discussing the technical details of the surface-reacted magnesium carbonate of the present invention.

The delivery system for the release of one or more active agent(s) in a home care formulation thus comprises

a) a surface-reacted magnesium carbonate which is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof, and

b) one or more active agent(s) which is/are loaded on the surface-reacted magnesium carbonate.

Thus, one requirement of the present invention is that one or more active agent(s) is/are loaded onto and/or loaded into the pore volume of the surface-reacted magnesium carbonate.

It is appreciated that the one or more active agent(s) can be one kind of active agent. Alternatively, the one or more active agent(s) can be a mixture of two or more kinds of active agents. For example, the one or more active agent(s) can be a mixture of two or three kinds of active agents, like two kinds of active agents.

In one embodiment of the present invention, the one or more active agent(s) is one kind of active agent.

The term "active agent" in the meaning of the present invention refers to a substance having a specific effect in home care formulations.

In general, the one or more active agent(s) can be any kind of active agent known for home care formulations. For example, the one or more active agent(s) is/are selected from the group of active agents mentioned in the Regulation (EC) No 648/2004 of the European Parliament and of the Council of 31 March 2004 on detergents.

In one embodiment, the one or more active agent(s) is/are selected from the group comprising anionic surfactants, nonionic surfactants, cationic surfactants, amphoteric surfactants, phosphates, phosphonates, softener, sequestrants, builders, processing aids, enzymes, oxygen-based bleaching agents, chlorine-based bleaching agents, antiscaling agents, complexing agents, dispersing agents, nitrilotriacetic acid and salts thereof, phenols, halogenated phenols, paradichlorobenzene, aromatic hydrocarbons, aliphatic hydrocarbons, halogenated hydrocarbons, soap, zeolites, polycarboxylates, disinfectants, optical brightener, defoamers, colorants, fragrances and mixtures thereof. Preferably, the one or more active agent(s) is/are selected from the group comprising anionic surfactants, nonionic surfactants, cationic surfactants, amphoteric surfactants, phosphates, phosphonates and mixtures thereof. More preferably, the one or more active agent(s) is/are selected from the group comprising anionic surfactants, nonionic surfactants, cationic surfactants, amphoteric surfactants and mixtures thereof. That is to say, the one or more active agent(s) is/are preferably selected from surfactants.

It is appreciated that the term "surfactant" means any substance and/or mixture of substances which has surface-active properties and which consists of one or more hydrophilic, and one or more hydrophobic groups of such a nature and size that it is capable of reducing the surface tension of water, and of forming spreading or adsorption monolayers at the water-air interface, and of forming emulsions and/or microemulsions and/or micelles, and of adsorption at water-solid interfaces.

Anionic surfactants suitable for the home care formulation can be any anionic surfactant known for the kind of formulation to be prepared. For example, the anionic surfactant is selected from the group comprising alkane sulphonates, olefin sulphonates, fatty acid ester sulphonates, such as methyl or ethyl ester sulphonates, alkyl phosphonates, alkyl ether phosphonates, taurates, alkyl ether carboxylates, $C_8$-$C_{22}$ alkyl sulphates, $C_8$-$C_{22}$ alkylbenzene sulphates and salts thereof, $C_8$-$C_{22}$ alkyl alkoxy sulphates and salts thereof, such as sodium lauryl ether sulphate, $C_{12}$-$C_{22}$ methyl ester sulphonates and salts thereof, $C_{12}$-$C_{22}$ alkylbenzene sulphonates and salts thereof, such as sodium dodecylbenzenesulphonate, $C_{12}$-$C_{22}$ fatty acid soaps and salts thereof and mixtures thereof.

Nonionic surfactants suitable for the home care formulation can be any nonionic surfactant known for the kind of formulation to be prepared. For example, the nonionic surfactant is selected from the group comprising $C_8$-$C_{22}$ alkyl ethoxylates, $C_6$-$C_{12}$ alkyl phenol alkoxylates, alkylpolysaccharides, alkyl polyglucoside surfactants, glucamides, methylesteralkoxylates, alkoxylated alcohols, such as alkoxylated $C_{12}$-$C_{22}$ alcohols, fatty alcohol alkoxylates, optionally modified fatty alcohol alkoxylates, ethoxylated or propoxylated sorbitan esters, polyhydroxy fatty acid amides, rhamnolipids, glucoselipids, lipopeptides and mixtures thereof.

Cationic surfactants suitable for the home care formulation can be any cationic surfactant known for the kind of formulation to be prepared. For example, useful cationic surfactants can be selected from fatty amines, quaternary ammonium surfactants, esterquats, i.e. quaternized fatty acid surfactants, and mixtures thereof.

Amphoteric surfactants suitable for the home care formulation can be any amphoteric surfactant known for the kind of formulation to be prepared. For example, the amphoteric surfactants can be selected from aliphatic derivatives of secondary or tertiary amines and/or aliphatic derivatives of heterocyclic secondary and tertiary amines in which the aliphatic radical can be a straight- or branched-chain.

In one embodiment, the one or more active agent(s) is/are a softener well known in the art. For example, the softener is a sodium salt of a copolymer from maleic acid and acrylic acid.

In an alternative embodiment, the one or more active agent(s) is/are an anti-scaling agent well known in the art. For example, the anti-scaling agent is a sodium salt of an acrylic acid homopolymer.

In an alternative embodiment, the one or more active agent(s) is/are a complexing agent well known in the art. For example, the complexing agent is selected from the group comprising tetrasodium etidronate ($Na_4HEDP$), ethylenediaminetetraacetic acid (EDTA) and mixtures thereof.

In an alternative embodiment, the one or more active agent(s) is/are a sequestrant well known in the art. For example, the sequestrant is selected from the group comprising sodium methylglycine diacetate, tetrasodium etidronate ($Na_4HEDP$), ethylenediaminetetraacetic acid (EDTA) and mixtures thereof.

It is appreciated that the one or more active agent(s) added to the home care formulation may have different functions. For example, if sodium methylglycine diacetate is added to the home care formulation, it may also function as builder.

In an alternative embodiment, the one or more active agent(s) is/are a dispersing agent well known in the art. For example, the dispersing agent can be a polyethylene glycol, such as a polyethylene glycol having a molar mass from 2 000 to 10 000 g/mol, preferably of about 4 000 g/mol.

The home care formulation may also comprise enzymes. Suitable enzymes for the home care formulation can be any enzyme known for the kind of formulation to be prepared. For example, suitable enzymes are selected from the group comprising hemicellulases, peroxidases, proteases, lipases, phospholipases, esterases, reductases, oxidases, oxygenases, lipoxygenases, haloperoxidases, amylases and mixtures thereof.

Optical brighteners for the home care formulation can be any optical brightener known for the kind of formulation to be prepared. Examples of suitable optical brighteners include derivatives of stilbene or 4,4'-diaminostilbene, biphenyl, five-membered heterocycles such as triazoles, oxazoles, imidiazoles, and the like, or six-membered heterocycles such as coumarins, naphthalamide, s-triazine, and the like.

There are, however, some limitations, which therefore are excluded from the subject-matter of the present invention. Thus, active agent(s) reacting with the carrier material, i.e. the surface-reacted magnesium carbonate, such as acidic agents sometimes are not suitable to be loaded on the carrier material. On the other hand, even acidic agents may be advantageously used, e.g., if the magnesium salt of the acidic agent is required or beneficial. A certain level of acidity can also enhance loading on the surface of the carrier material.

The one or more active agent(s) is/are loaded onto and/or loaded into the pore volume of the surface-reacted magnesium carbonate. The loading is preferably an adsorption onto the surface of the surface-reacted magnesium carbonate be it the outer or the inner surface, i.e. the pore volume, of the material or an absorption into the carrier material, which is possible due to its porosity.

In this respect, it is believed that because of the advantageous treatment of the surface of the magnesium carbonate, this material is a superior carrier material to release previously loaded active agent(s) over time relative to common carrier materials comprising (neat) magnesium carbonate, i.e. a magnesium carbonate which is not obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

Thus, it is appreciated that the one or more active agent(s) is/are loaded onto and/or loaded into the pore volume of the surface-reacted magnesium carbonate.

As already mentioned, the delivery system comprises the carrier material as defined herein and one or more active agent(s) is/are loaded onto and/or loaded into the pore volume of the surface-reacted magnesium carbonate.

The amount of the one or more active agent(s) is/are loaded onto and/or loaded into the pore volume of the surface-reacted magnesium carbonate depends on the active agent(s) and the intended use. Generally, the delivery system comprises the one or more active agent(s) in an amount ranging from 10 to 300 wt.-%, based on the total weight of the carrier material.

For example, the delivery system comprises the one or more active agent(s) in an amount ranging from 40 to 290 wt.-%, more preferably from 60 to 280 wt.-%, and most preferably from 80 to 260 wt.-%, based on the total weight of the carrier material.

It is preferred that the delivery system comprises the one or more active agent(s) in an amount ranging from 90 to 200 wt.-%, based on the total weight of the carrier material.

The delivery system can be provided in any form that is conventionally employed for the material(s) involved in the type of product to be produced. It is appreciated that the delivery system is in the form of a particulate material. The term "particulate" in the meaning of the present application refers to a material which is composed of a plurality of particles.

Thus, the delivery system is preferably in the form of a free flowing powder, a tablet, a pellet, or granules. More preferably, the delivery system is in the form of a free flowing powder. Such forms and methods for their preparation are well known in the art and do not need to be described in more detail in the present application.

The method for preparing a delivery system for the release of one or more active agent(s) in a home care formulation comprises the steps of

> a) providing a surface-reacted magnesium carbonate which is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof,
> b) providing one or more active agent(s) in the form of a liquid or dissolved in a solvent,
> c) contacting the surface-reacted magnesium carbonate of step a) with the one or more active agent(s) of step b), and
> d) optionally removing the solvent by evaporation if used in step b).

With regard to the definition of the surface-reacted magnesium carbonate, one or more active agent(s) and preferred embodiments thereof, reference is made to the statements provided above when discussing the technical details of the surface-reacted magnesium carbonate and the delivery system of the present invention.

The surface-reacted magnesium carbonate may be provided in any suitable liquid or dry form in step a). For example, the surface-reacted magnesium carbonate may be in form of a powder and/or a suspension. The suspension can be obtained by mixing the surface-reacted magnesium carbonate with a solvent, preferably methanol, ethanol, acetone, water and mixtures thereof. The surface-reacted magnesium carbonate to be mixed with a solvent, and preferably water, may be provided in any form, for example, as suspension, slurry, dispersion, paste, powder, a moist filter cake or in pressed or granulated form.

In order to obtain a high loading of the one or more active agent(s) on the surface-reacted magnesium carbonate, it is advantageous to provide the surface-reacted magnesium carbonate as concentrated as possible, i.e. the solvent content should be as low as possible. Thus, the surface-reacted magnesium carbonate is preferably provided in dry from, i.e. as a powder, preferably a free-flowing powder.

In case the surface-reacted magnesium carbonate is provided in dry form, the moisture content of the magnesium carbonate can be between 0.01 and 20 wt.-%, based on the total weight of the magnesium carbonate. The moisture content of the surface-reacted magnesium carbonate can be, for example, in the range from 0.01 to 15 wt.-%, based on the total weight of the surface-reacted magnesium carbonate, preferably in the range from 0.02 to 12 wt.-%, and more preferably in the range from 0.04 to 10 wt.-%.

According to step b) of the present method, the one or more active agent(s) is/are provided in the form of a liquid or dissolved in a solvent.

That is to say, in one embodiment the one or more active agent(s) is/are in the form of a liquid. The term "liquid" with regard to the one or more active agent(s) refers to non-gaseous fluid active agent(s), which is/are readily flowable at the pressure conditions and temperature of use, i.e. the pressure and temperature at which the method, preferably method step c), is carried out.

Thus, it is appreciated that the one or more active agent(s) can be liquid in a temperature range from 5 to 200 °C, preferably from 10 to 120 °C and most preferably from 10 to 100 °C. For example, the one or more active agent(s) can be liquid in a temperature range from 5 to 200 °C, preferably from 10 to 120 °C and most preferably from 10 to 100 °C at ambient pressure conditions, i.e. at atmospheric pressure. Alternatively, the one or more active agent(s) can be liquid in a temperature range from 5 to 200 °C, preferably from 10 to 120 °C and most preferably from 10 to 100 °C at reduced pressure conditions, e.g. a pressure of from 100 to 700 mbar.

In one embodiment, the one or more active agent(s) in step b) are preferably provided heated to a temperature where their Brookfield viscosity (measured with a No. 3 Spindle, 100 rpm) lies below 1 000 mPa·s, preferably in the range from 100 to 1 000 mPa·s, provided that such a temperature does not lead to the chemical degradation of the one or more active agent(s). Such a temperature might be, for example, from 25 to 70°C, preferably from 30 to 60 °C and most preferably from 40 to 55°C.

Alternatively, the one or more active agent(s) is/are dissolved in a solvent. That is to say, the one or more active agent(s) and the solvent form a system in which no discrete solid particles are observed in the solvent and thus form a "solution".

In one embodiment of the present invention, the solvent is selected from the group comprising water, methanol, ethanol, n-butanol, isopropanol, n-propanol, acetone, dimethylsulphoxide, dimethylformamide, tetrahydrofurane, vegetable oils and the derivatives thereof, animal oils and the derivatives thereof, molten fats and waxes, and mixtures thereof. Preferably, the solvent is selected from water, alkanes, esters, ethers, alcohols, such as ethanol, ethylene glycol and glycerol, and/or ketones, such as acetone. More preferably, the solvent is water.

The contacting of the surface-reacted magnesium carbonate of step a) with the one or more active agent(s) of step b) may be carried out in any manner known by the skilled person. The contacting is preferably carried out under mixing. The mixing may be carried out under conventional mixing conditions. The skilled person will adapt these mixing conditions (such as the configuration of mixing pallets and mixing speed) according to his process equipment. It is appreciated that any mixing method which would be suitable to form the delivery system may be used.

It is appreciated that the surface-reacted magnesium carbonate of step a) is loaded with the one or more active agent(s) of step b) by contacting step c) to form the delivery system.

The loading may be achieved by adding the one or more active agent(s) to the dry surface-reacted magnesium carbonate.

According to the present invention, the surface-reacted magnesium carbonate is defined to be loaded, if the specific surface area is at least partially covered and/or the intra-particle pore volume of same is at least partially filled by the one or more active agent(s), and if present, the solvent in which the one or more active agent(s) is/are dissolved. For example, the surface-reacted magnesium carbonate is loaded, if the specific surface area is at least partially covered and/or the intra-particle pore volume of same is at least partially filled by at least 10 wt.-%, preferably at least 40 wt.%, more preferably at least 60 wt.%, and most preferably at least 80 wt.%, e.g. at least 90 wt.%, based on the total weight of the surface-reacted magnesium carbonate, with the one or more active agent(s), and if present, the solvent in which the one or more active agent(s) is/are dissolved. Preferably, the surface-reacted magnesium carbonate is loaded, if the specific surface area is at least partially covered and/or the intra-particle pore volume of same is at least partially filler by 10 to 300 wt.-%, more preferably from 40 to 290 wt.-%, even more preferably from 60 to 280 wt.-%, and most preferably from 80 to 260 wt.-%, e.g. from 90 to 200 wt.-%, based on the total weight of the surface-reacted magnesium carbonate, with the one or more active agent(s), and if present, the solvent in which the one or more active agent(s) is/are dissolved.

It is appreciated that method step c) can be carried out over a broad temperature and/or pressure range, provided that the one or more active agent(s) is/are in liquid form. For example, method step c) is carried out in a temperature range from 5 to 200 °C, preferably from 10 to 120 °C and most preferably from 10 to 100 °C at ambient pressure conditions, i.e. at atmospheric pressure. Alternatively, method step c) is carried out in a temperature range from 5 to 200 °C, preferably from 10 to 120 °C and most preferably from 10 to 100 °C at reduced pressure conditions, e.g. a pressure of from 100 to 700 mbar.

In one embodiment, method step c) is carried out at ambient temperature and pressure conditions, e.g., at room temperature, such as from about 5 to 35 °C, preferably from 10 to 30 °C and most preferably from 15 to 25°C, and at atmospheric pressure. This embodiment preferably applies in case the one or more active agent(s) is/are liquid at room temperature or are dissolved in a solvent.

In another embodiment, method step c) is carried out at a temperature where the Brookfield viscosity (measured with a No. 3 Spindle, 100 rpm) of the one or more active agent(s) provided in step b) lies below 1 000 mPa·s, preferably in the range from 100 to 1 000 mPa·s, provided that such a temperature does not lead to the chemical degradation of the one or more active agent(s). Such a temperature might be, for example, from about 25 to 70°C, preferably from 30 to 60 °C and most preferably from 40 to 55 °C.

In case the one or more active agent(s) is/are dissolved in a solvent, the solvent is preferably removed after method step c) by evaporation. Thus, the method optionally comprises a step d) of optionally removing the solvent by evaporation if such a solvent is used in step b). In this embodiment, the method thus preferably comprises a further step of separating the prepared delivery system from the excess solvent.

The solvent is removed by evaporation. This is preferably achieved by drying by means selected from the group comprising drying in a rotational oven, jet-drying, fluidized bed drying, freeze drying, flash drying, spray drying and temperature-controlled high or low shear mixer.

The delivery system according to the present invention may thus be produced by a method comprising the following steps:

a) providing a surface-reacted magnesium carbonate which is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof,

b) providing one or more active agent(s) dissolved in a solvent,

c) contacting the surface-reacted magnesium carbonate of step a) with the one or more active agent(s) of step b), and

d) removing the solvent by evaporation.

The method may further comprise an optional step e) of granulating the mixture obtained in step c) or optional step d) for obtaining tablets, pellets or granules of the desired form and size.

The granulation equipment may be selected from the conventionally used ones for granulation purposes. Thus, the granulation device may be selected from the group comprising Eirich mixers, fluidized bed dryers/granulators, plate granulators, table granulators, drum granulators, disc granulators, dish granulators, ploughshare mixer, vertical or horizontal mixers, high or low shear mixer, high speed blenders, roller compactor and rapid mixer granulators.

It might be noted that there may be differences as regards the granule sizes or granule size distributions to be achieved depending on the method used.

For example, the use of a fluidized bed mixer for granulation appears to provide a more uniform granule size distribution than the Lödige mixer, whereas the Lödige mixer gives a wider size distribution. Thus, multiple size ranges may be provided.

In one embodiment, the method for preparing a delivery system for the release of one or more active agent(s) in a home care formulation comprises the steps of

a) providing a surface-reacted magnesium carbonate which is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof,

b) providing one or more active agent(s) in the form of a liquid or dissolved in a solvent,

c) contacting the surface-reacted magnesium carbonate of step a) with the one or more active agent(s) of step b),

d) optionally removing the solvent by evaporation if used in step b), and

e) granulating the delivery system formed in step c) or optional step d) for obtaining tablets, pellets or granules.

It is appreciated that the surface-reacted magnesium carbonate has a high loading capacity for active agent(s) together with a high release efficiency when loaded with active agent(s). Thus, the loading and especially the release characteristics for active agent(s) in a home care formulation can be improved by using a delivery system comprising a surface-reacted magnesium carbonate as defined herein as carrier material.

In another aspect, the present inventions refers to the use of the delivery system as defined herein for the release of one or more active agent(s) in a home care formulation.

With regard to the definition of the delivery system and preferred embodiments thereof, reference is made to the statements provided above when discussing the technical details of the delivery system of the present invention.

Home care formulation

According to another aspect, a home care formulation is provided. It is required that the home care formulation comprises a delivery system for the release of one or more active agent(s) as defined herein.

With regard to the definition of the delivery system and preferred embodiments thereof, reference is made to the statements provided above when discussing the technical details of the delivery system of the present invention.

One requirement of the present invention is that the home care formulation comprises the delivery system as defined herein.

The home care formulation thus comprises a delivery system for the release of one or more active agent(s) in a home care formulation, the delivery system comprising

a) a surface-reacted magnesium carbonate which is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof, and

b) one or more active agent(s) which is/are loaded on the surface-reacted magnesium carbonate.

The home care formulation may be in any form known for the formulations to be prepared. For example, the home care formulation is in form of a liquid, a free flowing powder, a paste, a gel, a bar, a cake, a pouch or a moulded piece, such as a tablet.

Thus, the home care formulation can be a dry or pourable liquid formulation.

The term "dry" formulation in the meaning of the present invention refers to a formulation that is a pourable solid at 23 °C and 1 bar. Thus, a dry home care formulation is preferably in the form of a free flowing powder, a bar, a cake or a moulded piece, e.g. a tablet.

In the meaning of the present invention, the term "free flowing" refers to the powder's ability to flow evenly, by means of gravity and other forces, when dosed from a container or hopper.

The moulded piece may have any shape or form suitable for use in the kind of formulations to be prepared. For example, the moulded piece may be a tablet.

It is appreciated that the delivery system of the present invention may be loaded with one or more active agent(s) which is/are liquid, e.g. liquid surfactants, and thus forms a delivery system containing liquid active agent(s) inside its pore volume. Thus, the home care formulation can be advantageously provided as a dry formulation although the one or more active agent(s) which is/are liquid are typically not suitable for dry formulations.

The term "pourable liquid" formulation in the meaning of the present invention refers to a non-gaseous fluid composition, which is readily pourable at 23 °C and 1 bar. Preferably, the pourable liquid formulation has a Brookfield viscosity of less than 10 000 mPa·s at 23 °C. For example, the pourable liquid formulation has a Brookfield viscosity in the range from 100 to 10 000 mPa·s at 23 °C.

The Brookfield viscosity as used herein and as generally defined in the art is measured by using a DV III Ultra model Brookfield viscometer equipped with the disc spindle 3 at a rotation speed of 100 rpm and room temperature (23 ± 1 °C) after stirring for one minute.

Thus, a pourable liquid home care formulation is preferably in the form of a liquid, a paste or a gel. That is to say, the delivery system is preferably provided in a solvent, especially water, to form the pourable liquid home care formulation.

In general, a "liquid" formulation refers to a formulation having a Brookfield viscosity of < 2 000 mPa·s at 23 °C. For example, the formulation in form of a liquid has a viscosity in the range of from 100 to < 2 000 mPa·s, preferably from 150 to 1 500 mPa·s and most preferably from 200 to 1 000 mPa·s, at 23 °C.

A "gel" or "paste" refers to a formulation having a Brookfield viscosity of > 2 000 mPa·s at 23 °C. For example, the liquid formulation in form of a paste refers to an opaque formulation having a Brookfield viscosity in the range from > 2 000 to 10 000 mPa·s, preferably from 3 000 to 10 000 mPa·s preferably from 5 000 to 10 000 mPa·s at 23 °C.

Preferably, the home care formulation is in form of a pourable liquid formulation.

The home care formulation, preferably the pourable liquid formulation, can be also in the form of a pouch. That is to say, the home care formulation can be filled in a polymer bag, such as a polyethylene, polypropylene, polyethylene/polypropylene, polyvinylalcohol, polyvinylalcohol derivatives or polyethylene terephthalate bag. Preferably, the home care formulation is filled in a polymer bag made from polyvinylalcohols or polyvinylalcohol derivatives. Examples of polyvinylalcohols or polyvinylalcohol derivatives include, but are not limited to, polyvinyl acetate or ethoxylated polyvinyl alcohol.

The home care formulation is preferably in form of a single dose formulation.

Additionally or alternatively, the home care formulation is a high concentrated home care formulation, such as a high concentrated powder formulation.

The home care formulation comprises the delivery system for the release of one or more active agent(s) preferably in an amount ranging from 0.1 to 99.0 wt.-%, preferably from 0.1 to 80.0 wt.-%, more preferably from 0.5 to 60.0 wt.-% and most preferably from 1.0 to 40.0 wt.-%, based on the total weight of the home care formulation.

It is appreciated that the home care formulation may further comprise additives typically used in the kind of formulation to be prepared.

The term "home care formulation" refers to a formulation that is intended for any washing and cleaning process and used in household applications.

The home care formulation can be a washing formulation, preferably for cleaning of laundry, fabrics, dishes and hard surfaces; a pre-washing formulation; a rinsing formulation; a bleaching formulation; a laundry fabric-softener formulation; a cleaning formulation; and mixtures thereof.

The term "washing" in the meaning of the present invention preferably refers to the cleaning of laundry, fabrics, dishes and hard surfaces.

The term "cleaning" has the meaning defined by EN ISO 862.

The term "pre-washing" in the meaning of the present invention preferably refers to the soaking of fabrics, such as clothes, household linen and the like.

The term "rinsing" in the meaning of the present invention refers to the removal of water-soluble or water-insoluble substances, such as surfactants, by applying excessive amounts of water.

The term "bleaching" in the meaning of the present invention refers to the oxidative or reductive bleaching and optical whitening of a fabric.

The term "laundry fabric-softener" in the meaning of the present invention preferably refers to the feel modification of fabrics in processes complementing the washing of fabrics.

The following examples may additionally illustrate the invention but are not meant to restrict the invention to the exemplified embodiments. The examples below show the release of one or more active agent(s) in a home care formulation of a delivery system comprising a surface-reacted magnesium carbonate is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

**Examples**

**1. Measurement methods**

In the following, measurement methods implemented in the examples are described.

**Particle size distribution**

Volume determined median particle size $d_{50}$(vol) and the volume determined top cut particle size $d_{98}$(vol) was evaluated using a Malvern Mastersizer 3000 Laser Diffraction System (Malvern Instruments Plc., Great Britain) equipped with a Hydro LV system. The $d_{50}$(vol) or $d_{98}$(vol) value indicates a diameter value such that 50 % or 98 % by volume, respectively, of the particles have a diameter of less than this value. The powders were suspended in 0.1 wt.-% $Na_4O_7P_2$ solution. 10 mL of 0.1 wt.-% $Na_4O_7P_2$ was added to the Hydro LV tank, then the sample slurry was introduced until an obscuration between 10-20 % was achieved. Measurements were conducted with red and blue light for 10 s each. For the analysis of the raw data, the models for non-spherical particle sizes using Mie theory was utilized, and a particle refractive index of 1.57, a density of 2.70 g/cm$^3$, and an absorption index of 0.005 was assumed. The methods and instruments are known to the skilled person and are commonly used to determine particle size distributions of fillers and pigments.

**Specific surface area (SSA)**

The specific surface area was measured via the BET method according to ISO 9277:2010 using nitrogen as adsorbing gas on a Micromeritics ASAP 2460 instrument from Micromeritics. The samples were pretreated in vacuum (10$^{-5}$ bar) by heating at 150 °C for a period of 60 min prior to measurement.

**Porosimetry**

The specific pore volume was measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m ($\sim$ nm). The equilibration time used at each pressure step is 20 seconds. The sample material is sealed in a 3 cm$^3$ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 $\mu$m down to about 1-4 $\mu$m showing the coarse packing of the sample between any agglomerate structures contributing strongly. Below these diameters lies the fine interparticle packing of the particles themselves. If they also have intraparticle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

### Amount of surface-treatment layer

The amount of the treatment layer on the magnesium and/or calcium ion-containing material is calculated theoretically from the values of the BET of the untreated magnesium and/or calcium ion-containing material and the amount of the one or more compound(s) that is/are used for the surface-treatment. It is assumed that 100 % of the one or more compound(s) are present as surface treatment layer on the surface of the magnesium and/or calcium ion-containing material.

### 2. Materials used

The materials used for the present invention had the characteristics set out in the following table 1.

Table 1: Characterization of the magnesium carbonates

| # | Sample | $d_{50}$ / $\mu$m | $d_{98}$ / $\mu$m | $S_{BET}$ / m$^2$ g$^{-1}$ | $V_{pore, Hg}$ / cm$^3$ g$^{-1}$ | $V_{pore, Hg}$ / $S_{BET}$ / cm$^3$ m$^{-2}$ |
|---|---|---|---|---|---|---|
| #A | Hydromagnesite | 25 | 73 | 25.0 | 1.711 | 0.068 |
| #A1 | Citr/hydromagnesite | 20 | 58 | 24.8 | - | - |
| #A2 | Sulph/hydromagnesite | 20 | 58 | 19.5 | - | - |

For the surface reactions, 11 L of a 10 wt.% slurry of the hydromagnesite (#A) was prepared. To this slurry, the desired quantity of sodium sulphate ($\geq$99%, Sigma Aldrich, 238597-1KG) or sodium dihydrogencitrate (99%, Sigma-Aldrich, 234265-1KG) was added to attain a nominal loading of 5 wt.% based on the dry weight of the hydromagnesite. The slurry was stirred for 1 h at room temperature and subsequently spray-dried in a GEA Niro A/S spray dryer with an inlet temperature of 270 °C, and an outlet temperature of 110 °C. Throughout this report, the surface-reacted samples are referred to as Citr/hydromagnesite (#A1) and Sulph/hydromagnesite (#A2) for the sodium sulphate and sodium dihydrogencitrate reacted samples, respectively. The characteristics for the surface-reacted samples obtained are also set out in table 1.

### 3. Loading and release experiments

The loading-release experiments were conducted using Hoesch AE 50, a sodium dodecylbenzolsulphonate surfactant typically used for dishwashing. For the loading trials, the desired amount of magnesium carbonate (10 g) was weighed into a beaker. Subsequently, the surfactant (10 g) was added drop-wise using a pipette. The added quantity was monitored gravimetrically. The magnesium carbonate and the liquid were mixed thoroughly for 5 min. The loading was calculated as detailed in Equation (1).

$$\text{Loading } [\%] = \frac{\text{mass of surfactant } [g]}{\text{mass of powder } [g]} \cdot 100 \qquad (1)$$

For the release experiments, the loaded samples (0.5 g) were dispersed in water (1 L) using a magnetic stirrer (300 rpm) for 1 h at room temperature. The amount of loaded sample was selected to attain a concentration of 0.25 g L$^{-1}$ of Hoesch AE 50 based on a 100% recovery. Afterwards, the suspensions were filtered using a syringe filter (0.2 $\mu$m). The concentration of the surfactant in the liquids were determined by UV spectroscopic evaluation conducted in a Hach Lange DR6000 spectral photometer based on the absorbance at a wavelength $\lambda$ = 224 nm. The concentration was calculated based on a corresponding calibration curve of 5 samples of known concentrations.

All samples were loaded with 100 wt.% of the surfactant, and release tests were conducted at a target concentration of 0.25 g L$^{-1}$, which represents an approximation of the surfactant concentration in real washing trials. The recovery of the surfactant is defined as the amount measured in solution using UV-VIS spectroscopy, divided by the theoretical amount introduced. The utilized loading and the corresponding release data for all samples are provided in the following Table 2.

Table 2: Loading and release (recovery) data of the tested samples

| Sample | Loading" / % | $C_{loaded\ mineral}$[a] / g L$^{-1}$ | $C_{Tensid}$[a] / g L$^{-1}$ | Recovery / % |
|---|---|---|---|---|
| #A (comparative) | 100.3 | 0.502 | 0.251 | 59.1 |
| #A1 (Citr/hydromagnesite) (inventive) | 100.4 | 0.506 | 0.253 | 82.6 |
| #A2 (Sulph/hydromagnesite) (inventive) | 101.1 | 0.502 | 0.252 | 80.6 |
| [a] Calculated values based on recorded weights | | | | |

All samples were tested at identical concentration and loading to facilitate the direct comparison between the materials.

It should be considered that for a given material, a higher loading results in a higher recovery, so the selection of an optimal magnesium carbonate should be conducted under consideration of the maximum attainable loading.

It can be gathered from table 2 that the comparative material, #A, attained a recovery of about 60% with surfactant. In contrast, if the surface of the same magnesium carbonate is treated with 5 wt.% of sodium citrate, the recovery of the surfactant is increased to about 83% (see sample #A1). While this difference might sound small, it essentially means that the quantity of "lost" surfactant is reduced by 57.5%. Without wishing to be bound by theory, it is assumed that the sodium citrate adsorbs on the surface and thereby quenches the acidic surface of the magnesium carbonate. A similar effect was observed for sodium sulphate, where the recovery was increased to about 81% (see sample #A2).

In view of this, a surface-reacted magnesium carbonate according to the present invention provides an increased recovery of surfactants.

## Claims

1.  Surface-reacted magnesium carbonate, wherein the surface-reacted magnesium carbonate is obtained by treating the surface of magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof.

2.  The surface-reacted magnesium carbonate according to claim 1, wherein the magnesium carbonate is selected from the group consisting of anhydrous magnesium carbonate or magnesite ($MgCO_3$), hydromagnesite ($Mg_5(CO_3)_4(OH)_2 \cdot 4H_2O$), artinite ($Mg_2(CO_3)(OH)_2 \cdot 3H_2O$), 15 dypingite ($Mg_5(CO_3)_4(OH)_2 \cdot 5H_2O$), giorgiosite ($Mg_5(CO_3)_4(OH)_2 \cdot 5H_2O$), pokrovskite ($Mg_2(CO_3)(OH)_2 \cdot 0.5H_2O$), barringtonite ($MgCO_3 \cdot 2H_2O$), lansfordite ($MgCO_3 \cdot 5H_2O$), dolocarbonate and nesquehonite ($MgCO_3 \cdot 3H_2O$)

3.  The surface-reacted magnesium carbonate according to claim 1 or 2, wherein the magnesium carbonate has

    a) a BET specific surface area in the range from 10 to 100 m$^2$/g, preferably from 12 to 50 m$^2$/g, and most preferably from 17 to 40 m$^2$/g, measured using nitrogen and the BET method according to ISO 9277:2010, and/or
    b) an intra-particle intruded specific pore volume in the range from 0.9 to 2.3 cm$^3$/g, preferably from 1.2 to 2.1 cm$^3$/g, and most preferably from 1.5 to 2.0 cm$^3$/g, calculated from mercury porosimetry measurement, and/or
    c) a $d_{50}$(vol) in the range from 1 to 75 $\mu$m, preferably from 1.2 to 50 $\mu$m, more preferably from 1.5 to 30 $\mu$m, even more preferably from 1.7 to 15 $\mu$m and most preferably from 1.9 to 10 $\mu$m, as determined by laser diffraction, and/or
    d) a $d_{98}$(vol) in the range from 2 to 150 $\mu$m, preferably from 4 to 100 $\mu$m, more preferably from 6 to 80 $\mu$m, even more preferably from 8 to 60 $\mu$m and most preferably from 10 to 40 $\mu$m, as determined by laser diffraction.

4.  The surface-reacted magnesium carbonate according to any one of the preceding claims, wherein the magnesium carbonate has a ratio of intra-particle intruded specific pore volume, calculated from mercury porosimetry measurement, to BET specific surface area, measured using nitrogen and the BET method according to ISO 9277:2010, of more than 0.01 $cm^3/m^2$, preferably more than 0.05 $cm^3/m^2$, and most preferably more than 0.06 $cm^3/m^2$, such as from 0.06 to 0.25 $cm^3/m^2$.

5. The surface-reacted magnesium carbonate according to any one of the preceding claims, wherein the magnesium carbonate contains up to 25 000 ppm $Ca^{2+}$ ions.

6. The surface-reacted magnesium carbonate according to any one of the preceding claims, wherein the surface-reacted magnesium carbonate is obtained by treating the surface of the magnesium carbonate with the one or more compound(s) or a corresponding salt thereof in an amount from 0.1 to 20 wt.-%, based on the total dry weight of the magnesium carbonate.

7. The surface-reacted magnesium carbonate according to any one of the preceding claims is a carrier material for the release of one or more active agent(s) in a home care formulation.

8. A delivery system for the release of one or more active agent(s) in a home care formulation, the delivery system comprising the surface-reacted magnesium carbonate according to any one of the preceding claims and one or more active agent(s) which is loaded on the carrier material.

9. The delivery system according to claim 8, wherein the one or more active agent(s) is/are loaded onto and/or loaded into the ore volume of the surface-reacted magnesium carbonate.

10. The delivery system according to claims 8 or 9, wherein the one or more active agent(s) is selected from the group of active agents mentioned in the Regulation (EC) No 648/2004 of the European Parliament and of the Council of 31 March 2004 on detergents, preferably the one or more active agent(s) is selected from the group comprising anionic surfactants, nonionic surfactants, cationic surfactants, amphoteric surfactants, phosphates, phosphonates, softener, sequestrants, builders, processing aids, enzymes, oxygen-based bleaching agents, chlorine-based bleaching agents, anti-scaling agents, complexing agents, dispersing agents, nitrilotriacetic acid and salts thereof, phenols, halogenated phenols, paradichlorobenzene, aromatic hydrocarbons, aliphatic hydrocarbons, halogenated hydrocarbons, soap, zeolites, polycarboxylates, disinfectants, optical brightener, defoamers, colorants, fragrances and mixtures thereof.

11. The delivery system according to any one of claims 8 to 10, wherein the delivery system comprises the one or more active agent(s) in an amount ranging from 10 to 300 wt.-%, preferably from 40 to 290 wt.-%, more preferably from 60 to 280 wt.-%, and most preferably from 80 to 260 wt.-%, e.g. from 90 to 200 wt.-%, based on the total weight of the carrier material.

12. The delivery system according to any one of claims 8 to 11, wherein the delivery system is in the form of a free flowing powder, a tablet, a pellet, or granules, preferably a free flowing powder.

13. Home care formulation comprising a delivery system for the release of one or more active agent(s) according to any one of claims 8 to 12.

14. The home care formulation according to claim 13, wherein the formulation is in form of a liquid, a free flowing powder, a paste, a gel, a bar, a cake, a pouch or a moulded piece, such as a tablet.

15. The home care formulation according to claim 13 or 14, wherein the formulation is a washing formulation, preferably for cleaning of laundry, fabrics, dishes and hard surfaces; a pre-washing formulation; a rinsing formulation; a bleaching formulation; a laundry fabric-softener formulation; a cleaning formulation; and mixtures thereof.

16. Method for preparing a surface-reacted magnesium carbonate according to any one of claims 1 to 7, the method comprising at least the steps of:

   i) providing magnesium carbonate,
   ii) providing one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof, and

iii) treating the surface of the magnesium carbonate of step a), under mixing, in one or more steps, with the one or more compound(s) or a corresponding salt thereof of step b) such that a reaction is achieved by the one or more compound(s) or the corresponding salt thereof and the surface of said magnesium carbonate.

17. Method for preparing a delivery system for the release of one or more active agent(s) in a home care formulation according to any one of claims 8 to 12, the method comprising the steps of

a) providing a surface-reacted magnesium carbonate which is obtained by treating the surface of the magnesium carbonate with one or more compound(s) selected from the group consisting of sulphuric acid, phosphoric acid, carbonic acid, carboxylic acids containing up to six carbon atoms, preferably selected from formic acid, acetic acid, propionic acid, lactic acid and mixtures thereof; and di-, and tri-carboxylic acids where the carboxylic acid groups are linked by a chain of 0-4 intermittent carbon atoms, preferably selected from oxalic acid, citric acid, succinic acid, maleic acid, malonic acid, tartaric acid, adipic acid, fumaric acid and mixtures thereof, or a corresponding salt thereof,

b) providing one or more active agent(s) in the form of a liquid or dissolved in a solvent,

c) contacting the surface-reacted magnesium carbonate of step a) with the one or more active agent(s) of step b), and

d) optionally removing the solvent by evaporation if used in step b).

18. Use of a surface-reacted magnesium carbonate according to any one of claims 1 to 7 as a carrier material for the release of one or more active agent(s) in a home care formulation.

19. Use of a delivery system according to any one of claims 8 to 12 for the release of one or more active agent(s) in a home care formulation.

Europäisches
Patentamt

European
Patent Office

Office européen
des brevets

# EUROPEAN SEARCH REPORT

Application Number

EP 19 17 2507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 335 544 A2 (ECC AMERICA INC [US]) 4 October 1989 (1989-10-04) | 1-7,16 | INV. C09C1/02 |
| A | * example 5 * | 8-15, 17-19 | C01F5/24 C11D3/12 C11D17/00 |
| X | US 5 253 660 A (DIXIT AJIT S [US] ET AL) 19 October 1993 (1993-10-19) | 1-7,16 | |
| A | * column 2 - column 4 * | 8-15, 17-19 | |
| X | US 5 009 809 A (KOSIN JOHN A [US] ET AL) 23 April 1991 (1991-04-23) | 1-7,16 | |
| A | * column 7, line 1 - line 40 * | 8-15, 17-19 | |
| X | US 4 683 157 A (MOSSER MARK F [US] ET AL) 28 July 1987 (1987-07-28) | 1-5,7,16 | |
| A | * example 2 * | 6,8-15, 17-19 | |
| X | EP 1 344 800 A1 (MERCK PATENT GMBH [DE]) 17 September 2003 (2003-09-17) | 1-5,7,16 | TECHNICAL FIELDS SEARCHED (IPC) |
| A | * paragraph [0083]; example 4; table 4 * | 8-15, 17-19 | C09C C01F C11D |
| A,D | US 4 303 542 A (HEINLEIN KARL H ET AL) 1 December 1981 (1981-12-01) | 1-19 | |

The present search report has been drawn up for all claims

| Place of search | Date of completion of the search | Examiner |
|---|---|---|
| The Hague | 5 November 2019 | Gumann, Sina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 2507

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2019

| Patent document cited in search report | | Publication date | Patent family member(s) | | Publication date |
|---|---|---|---|---|---|
| EP 0335544 | A2 | 04-10-1989 | EP | 0335544 A2 | 04-10-1989 |
| | | | US | 4859718 A | 22-08-1989 |
| US 5253660 | A | 19-10-1993 | NONE | | |
| US 5009809 | A | 23-04-1991 | NONE | | |
| US 4683157 | A | 28-07-1987 | NONE | | |
| EP 1344800 | A1 | 17-09-2003 | CN | 1443809 A | 24-09-2003 |
| | | | EP | 1344800 A1 | 17-09-2003 |
| | | | JP | 4412879 B2 | 10-02-2010 |
| | | | JP | 2003261796 A | 19-09-2003 |
| | | | KR | 20030074330 A | 19-09-2003 |
| | | | TW | I328026 B | 01-08-2010 |
| | | | US | 2004011253 A1 | 22-01-2004 |
| US 4303542 | A | 01-12-1981 | DE | 2916416 A1 | 06-11-1980 |
| | | | US | 4303542 A | 01-12-1981 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0526121 A
- GB 594262 A
- US 1361324 A
- US 935418 A
- GB 548197 A
- GB 544907 A
- US 5979461 A
- US 4303542 A
- EP 18153662 A
- WO 2013139957 A1
- WO 2015039994 A1

**Non-patent literature cited in the description**

- **GANE, P.A.C. ; KETTLE, J.P ; MATTHEWS, G.P. ; RIDGWAY, C.J.** Void Space Structure of Compressible Polymer Spheres and Consolidated Calcium Carbonate Paper-Coating Formulations. *Industrial and Engineering Chemistry Research,* 1996, vol. 35 (5), 1753-1764